(19) Europäisches Patentamt
European Patent Office
Office européen des brevets

(11) Numéro de publication : **0 023 458 B1**

(12)

# FASCICULE DE BREVET EUROPÉEN

(45) Date de publication du fascicule du brevet :
28.12.83

(21) Numéro de dépôt : 80401101.3

(22) Date de dépôt : 24.07.80

(51) Int. Cl.³ : **G 01 S 13/22**, G 01 S 13/24, G 01 S 7/28

(54) **Radar Doppler cohérent à impulsions à agilité de fréquence.**

(30) Priorité : 31.07.79 FR 7919633

(43) Date de publication de la demande :
04.02.81 Bulletin 81/05

(45) Mention de la délivrance du brevet :
28.12.83 Bulletin 83/52

(84) Etats contractants désignés :
DE GB IT SE

(56) Documents cités :
FR-A- 2 412 852
US-A- 4 099 137
ELECTRICAL COMMUNICATION, vol. 50, no. 2, 1975
LONDRES (GB) G.D.H. KING et al.: "Gunn-Oscillators
for Coherent Radars", pages 131-133
MICROWAVE JOURNAL, vol. 19, no. 12, décembre
1976 DEDHAM (GB) "Compact High Power Agile MW
Source", pages 16B-16D.
MICROWAVE JOURNAL, vol. 19, no. 3, mars 1976
DEDHAM (GB) E.F. SCHERER: "Compact Multi-Frequency Stalo Sources", pages 41-44
IEEE TRANSACTIONS ON AEROSPACE AND ELEC-
TRONIC SYSTEMS, vol. AES-11, no. 3, mai 1975 NEW
YORK (US) G.B. JORDAN: "Comparison of Two Major
Classes of Coherent Pulsed Radar Systems", pages
363-371

(73) Titulaire : **LMT RADIO PROFESSIONNELLE**
**46-47, Quai Alphonse Le Gallo**
**F-92103 Boulogne-Billancourt (FR)**

(72) Inventeur : **Petitjean, Christian Henri**
**THOMSON-CSF - SCPI 173 Boulevard Haussmann**
**F-75360 Paris Cedex 08 (FR)**

(74) Mandataire : **Thrierr, Françoise et al**
**THOMSON-CSF SCPI 173, Bld Haussmann**
**F-75379 Paris Cedex 08 (FR)**

## Radar Doppler cohérent à impulsions à agilité de fréquence

L'invention concerne un radar Doppler cohérent à impulsions qui permet de pratiquer l'agilité de fréquence d'émission et l'agilité de fréquence de répétition et notamment en association avec un codage de phase.

La pratique de l'agilité de fréquence consiste à faire varier au cours du temps la fréquence d'émission ou de répétition du radar pour rendre plus difficile une détection afin d'améliorer la résistance du radar aux actions de l'ennemi, par exemple sur un champ de bataille.

Dans les radars usuels à agilité de fréquence, des tubes oscillateurs de puissance sont utilisés dans des chaînes cohérées, c'est-à-dire que l'émission du tube oscillateur est mise en mémoire dans un oscillateur cohérent dit « COHO », afin de servir d'élément de comparaison avec le signal réfléchi par la cible et porteur de l'information de vitesse radiale au moyen de la fréquence Doppler.

Mais ces radars présentent de nombreux inconvénients. Tout d'abord, plus la cible est éloignée, plus le temps de mémorisation est grand et plus la qualité de l'information mémorisée est mauvaise, ce qui a pour conséquence de limiter la télémétrie alors que l'énergie d'émission permettrait de l'allonger.

D'autre part, le temps de positionnement est long puisque l'accord de la cavité est mécanique, ce qui limite le plus souvent la possibilité d'un saut de fréquence à chaque tour d'antenne. En outre, après changement d'accord de la cavité, l'émission présente une certaine instabilité d'une impulsion à une autre.

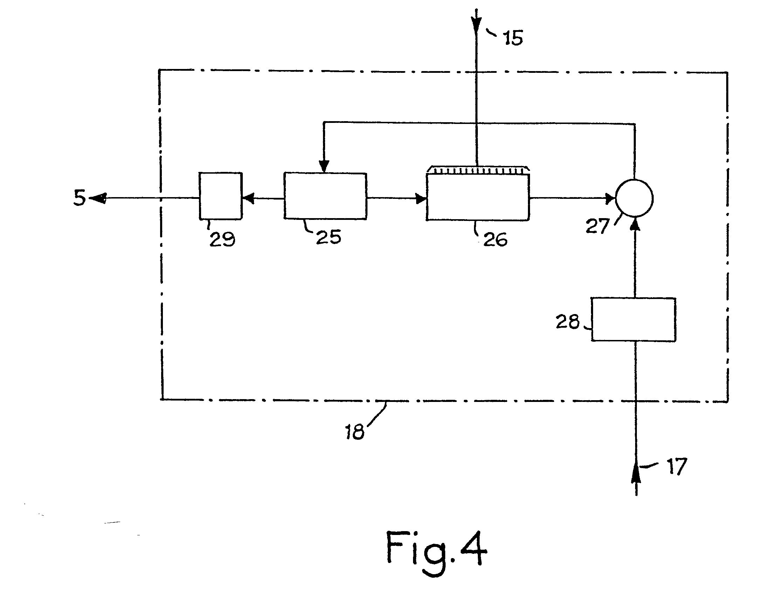

Dans les radars les plus récents, on emploie des systèmes à amplificateurs fonctionnant en chaîne cohérente, c'est-à-dire utilisant deux oscillateurs très stables à la fois pour l'émission et pour la réception. De tels radars sont notamment décrits dans « IEEE Transactions on Aerospace and Electronic Systems », Vol. AES11, n° 3 de mai 1975, en particulier page 364, figure 4B.

La validité de ce système réside dans la faible dérive différentielle de phase des oscillateurs entre l'instant d'émission et l'instant de réception, mais pour des cibles très éloignées cette dérive n'est plus négligeable et dégrade la qualité du système.

D'autre part, pour pratiquer l'agilité de fréquence il faut multiplier le nombre d'oscillateurs par le nombre de fréquences que l'on désire exploiter, ce qui limite le nombre de fréquences possibles étant donné l'accroissement du prix de revient.

L'invention propose un radar Doppler à impulsions à agilités de fréquence qui ne nécessite aucune mémorisation et qui assure en permanence un contrôle en phase des deux oscillateurs, à un écart de fréquence fixe, ce qui supprime la dégradation du taux de visibilité pour les distances élevées.

D'autre part, les oscillateurs ont une structure qui leur permet de fournir plusieurs fréquences avec un temps de passage d'une fréquence à une autre très nettement amélioré par rapport aux solutions mécaniques, ce qui permet l'exploitation de plusieurs fréquences par seconde.

L'invention présente, enfin, une autre amélioration qui permet tout en restant synchrone de faire varier la fréquence de répétition des impulsions émises autour de sa valeur centrale, afin de compenser les vitesses aveugles et d'abaisser la valeur de la vitesse radiale pour laquelle il y a ambiguïté liée à la périodicité du signal émis.

Selon une caractéristique de l'invention, le radar Doppler cohérent à impulsions à agilités de fréquence est constitué par une antenne, commune à l'émission et à la réception, et par une chaîne d'émission-réception cohérente conformément à la revendication 1.

Selon une autre caractéristique de l'invention, le radar comporte des moyens de modification de la fréquence de répétition constitués par un diviseur de fréquence dont l'entrée est reliée à la sortie de l'oscillateur de référence, dont la sortie est reliée au circuit de synchronisation du découpeur en impulsions et donc le rapport est fixé par le microprocesseur.

Selon une autre caractéristique de l'invention, le radar comporte simultanément des moyens de codage de phase, d'agilité de fréquence d'émission et d'agilité de fréquence de répétition compatibles.

Les objets et caractéristiques de la présente invention apparaîtront plus clairement à la lecture de la description suivante d'exemples de réalisation, ladite description étant faite en relation avec les dessins ci-annexés dans lesquels :

la figure 1 représente un exemple classique de radar Doppler à impulsions et à chaîne d'émission-réception cohérente ;

la figure 2 représente un exemple de radar conforme à l'invention ;

la figure 3 représente un autre exemple de radar conforme à l'invention dans lequel sont associés agilités de fréquence et codage de phase ;

la figure 4 représente de façon détaillée des moyens de modification de la fréquence de répétition conforme à l'invention.

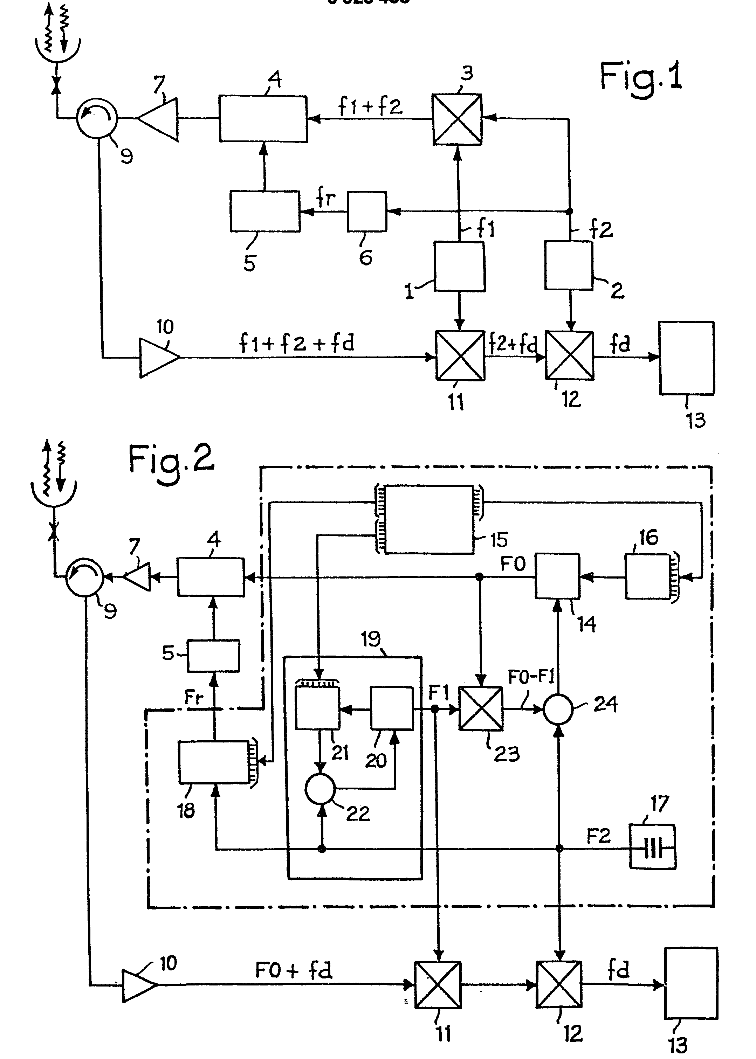

On a représenté à la figure 1 un exemple classique de radar Doppler à impulsions à chaîne d'émission-réception cohérente.

Ce système comporte deux oscillateurs 1 et 2 très stables de fréquence f1 et f2. Les signaux issus de ces oscillateurs sont transposés dans un mélangeur 3 qui recueille le battement supérieur à la fréquence f1 + f2. Le signal ainsi formé est découpé en impulsions par un découpeur 4 en synchronisme avec un signal d'horloge dont la fréquence ou fréquence de répétition fr est un sous-multiple exact de f2. Cette synchronisation est effectuée par un circuit de synchronisation 5 qui reçoit le signal de fréquence fr issu d'un diviseur de fréquence 6 relié à la sortie de l'oscillateur 2. Le signal issu du découpeur 4 est ensuite amplifié par un amplificateur de puissance 7, puis il est émis par une antenne 8, commune à l'émission et à la réception, via un duplexeur 9.

Le signal émis est réfléchi par une cible quelconque et devient le signal de retour dont le retard par rapport au signal émis est caractéristique de la distance de la cible et dont la translation de fréquence, fd ou fréquence Doppler, par rapport à la fréquence du signal émis est caractéristique de la vitesse radiale de la cible.

A la réception, on commence par amplifier le signal de retour à l'aide d'un amplificateur de puissance 10, puis on mélange à l'aide d'un premier mélangeur 11 ce signal avec le signal issu de l'oscillateur 1 pour produire par filtrage du battement inférieur, un signal à la fréquence f2 + fd.

On mélange le signal ainsi formé avec le signal issu de l'oscillateur 2 à l'aide d'un second mélangeur 12 et l'on filtre le battement inférieur pour obtenir un signal à la fréquence fd. Ce signal de fréquence fd est ensuite traité par des moyens 13 d'exploitation des informations et de visualisation.

Pour obtenir des informations de distance et de vitesse sans erreurs dues au système, il est nécessaire d'utiliser des oscillateurs d'une très grande stabilité avec les inconvénients que l'on a déjà décrits plus haut.

La figure 2 représente un exemple de réalisation d'un radar conforme à l'invention qui permet de pratiquer, aisément et avec une grande sécurité, l'agilité de fréquence d'émission et l'agilité de fréquence de répétition.

Les éléments de la figure 1 et de la figure 2, qui portent le même numéro, sont identiques et l'on a entouré d'un trait pointillé l'apport de l'invention.

Le radar comporte un oscillateur 14 d'émission contrôlé en tension dont la fréquence F0 est, tout d'abord, fixée par des moyens de modification de fréquence. Ces moyens, représentés à la figure 2, consistent en une commande par un microprocesseur 15 via un convertisseur 16 numérique-analogique et agissent par exemple sur une « varicap » ou condensateur de capacité variable. Le signal de fréquence F0 issu de l'oscillateur 14 est ensuite découpé en impulsions par le découpeur 4.

Le radar comporte un oscillateur 17 de référence de fréquence F2 ; cet oscillateur doit avoir une excellente stabilité en phase et en fréquence et l'on choisit, par exemple, un oscillateur à quartz.

Le découpage du signal issu de l'oscillateur d'émission 14 est effectué en synchronisme avec un signal d'horloge dont la fréquence ou fréquence de répétition Fr est un sous-multiple exact de F2, ce synchronisme étant réalisé à l'aide du circuit de synchronisation 5 qui reçoit ce signal d'horloge via des moyens 18 de modification de la fréquence de répétition qui sont décrits plus loin.

Après le découpage, le signal de fréquence F0 est émis et réfléchi, comme on l'a expliqué dans le cas de la figure 1, et le radar reçoit un signal de retour de fréquence F0 + fd, qui est amplifié par l'amplificateur 10.

Le radar comporte un oscillateur local 19 qui fournit un signal de fréquence F1 ; cet oscillateur 19 est structuré en synthétiseur de fréquence programmable. Il comporte un oscillateur 20 contrôlé en tension qui fournit le signal de fréquence F1. Cet oscillateur 20 est piloté par l'oscillateur 17 de référence grâce à une boucle à verrouillage de phase qui comprend l'oscillateur 20, un diviseur de fréquence 21 à rapport N variable programmé par le microprocesseur 15, qui reçoit le signal issu de l'oscillateur 20 et fournit un signal de fréquence F1N, et, un comparateur 22 de phase qui reçoit d'une part le signal issu du diviseur de fréquence 21, d'autre part le signal issu de l'oscillateur de référence 17 et qui fournit le signal de contrôle en tension de l'oscillateur 20. Ce synthétiseur fournit un signal de fréquence F1 égale à $N \cdot F2$ et en cohérence de phase avec le signal issu de l'oscillateur de référence 17.

Le radar comporte, enfin, une boucle à verrouillage de phase qui comprend premièrement l'oscillateur d'émission 14, deuxièmement un mélangeur 23 dont la première entrée est reliée à la sortie de l'oscillateur local 19, dont la seconde entrée est reliée à la sortie de l'oscillateur d'émission 14, qui effectue le mélange des signaux de fréquence F1 et F0, issus respectivement des oscillateurs 19 et 14, et qui fournit par filtrage du battement inférieur un signal à la fréquence F0-F1, et, troisièmement un comparateur de phase 24 dont la première entrée reçoit le signal de fréquence F0-F1 issu du mélangeur 23, dont la deuxième entrée reçoit le signal de fréquence F2 issu de l'oscillateur de référence 17 et dont la sortie est reliée à l'entrée de contrôle en tension de l'oscillateur d'émission 14.

Cette boucle de verrouillage de phase permet d'asservir l'oscillateur d'émission 14 à l'oscillateur local 19 en phase et à un écart de fréquence fixe et choisi ici égal à la fréquence F2 du signal issu de l'oscillateur de référence 17, c'est-à-dire qu'à l'état stable la fréquence F0 est égale à la somme des fréquences F1 et F2.

C'est pourquoi, le mélangeur 11 mélange le signal de retour de fréquence F0 + fd avec le signal de fréquence F1 issu de l'oscillateur local 19 pour produire par filtrage du battement inférieur un signal à la fréquence F0 + fd − F1 et comme F0 est égal à F1 + F2, on a en sortie du mélangeur 11 un signal de fréquence F2 + fd.

Il ne reste plus qu'à mélanger ce signal au signal de fréquence F2 à l'aide du mélangeur 12, pour obtenir par filtrage un signal ayant pour fréquence la fréquence Doppler fd.

Le dispositif que l'on vient de décrire en relation avec la figure 2 permet de pratiquer l'agilité de fréquence d'émission, c'est-à-dire qu'il permet de faire varier la fréquence d'émission plusieurs fois par seconde, grâce au microprocesseur 15 qui commande l'oscillateur d'émission 14 et qui commande en conséquence l'oscillateur local 19.

Commander l'oscillateur 19 consiste à choisir le rapport N du diviseur de fréquence 21 à rapport variable de telle sorte que, F0 étant choisie et F2 étant fixée, on ait $F0 - (N \cdot F2) = F2$.

Ainsi, grâce à la boucle à verrouillage de phase on a, à l'état stable, deux oscillateurs 14 émission et 19 local en permanence contrôlés en phase à un écart de fréquence égale à la fréquence de référence fixe F2.

Le problème de stabilité des oscillateurs est ainsi résolu et ce dispositif peut donc être utilisé sans risque de dégradation du taux de visibilité pour des distances radar élevées, c'est-à-dire supérieures à trente kilomètres.

Bien que la modification des fréquences F0 et F1 soit effectuée dans cet exemple à l'aide d'un microprocesseur, elle peut tout aussi bien être effectuée par un opérateur à l'aide de roues codeuses. Mais la commande par microprocesseur présente de nombreux avantages : d'une part, elle permet d'exploiter plusieurs fréquences par seconde, d'autre part, en associant des mémoires au microprocesseur, elle permet de changer séquentiellement les fréquences à l'aide de séquences préalablement choisies et inscrites dans ces mémoires.

Ce radar propose en même temps que l'agilité de fréquence d'émission, l'agilité de fréquence de répétition obtenue grâce aux moyens 18 de modification de la fréquence Fr.

Puisque la détection est en cohérence de phase avec la fréquence de référence F2 pour retrouver un signal de sortie fd nul lorsque la fréquence Doppler est nulle, il faut que la fréquence de répétition Fr soit un sous-multiple de la fréquence F2 pour que la phase du signal de retour soit constante à l'origine.

Dans le radar représenté à la figure 1, la fréquence de répétition fr est obtenue par division, par le diviseur de fréquence 6, de la fréquence porteuse f2 et la condition « fr sous-multiple de f2 » est bien respectée.

La réalisation la plus simple de l'agilité de fréquence de répétition consiste à utiliser comme moyens 18 de modification un diviseur de fréquence à rapport variable, dont l'entrée est reliée à la sortie de l'oscillateur 17 de référence, dont la sortie est reliée au circuit de synchronisation 5 et dont le rapport est fixé soit manuellement à l'aide de roues codeuses, soit séquentiellement, ou à la demande à l'aide du microprocesseur 15.

Cette possibilité de variation pour la fréquence de répétition offre des avantages pour la détection (vitesses aveugles) comme on l'a vu plus haut, mais également du point de vue de la protection car elle rend le décodage ennemi d'autant plus difficile.

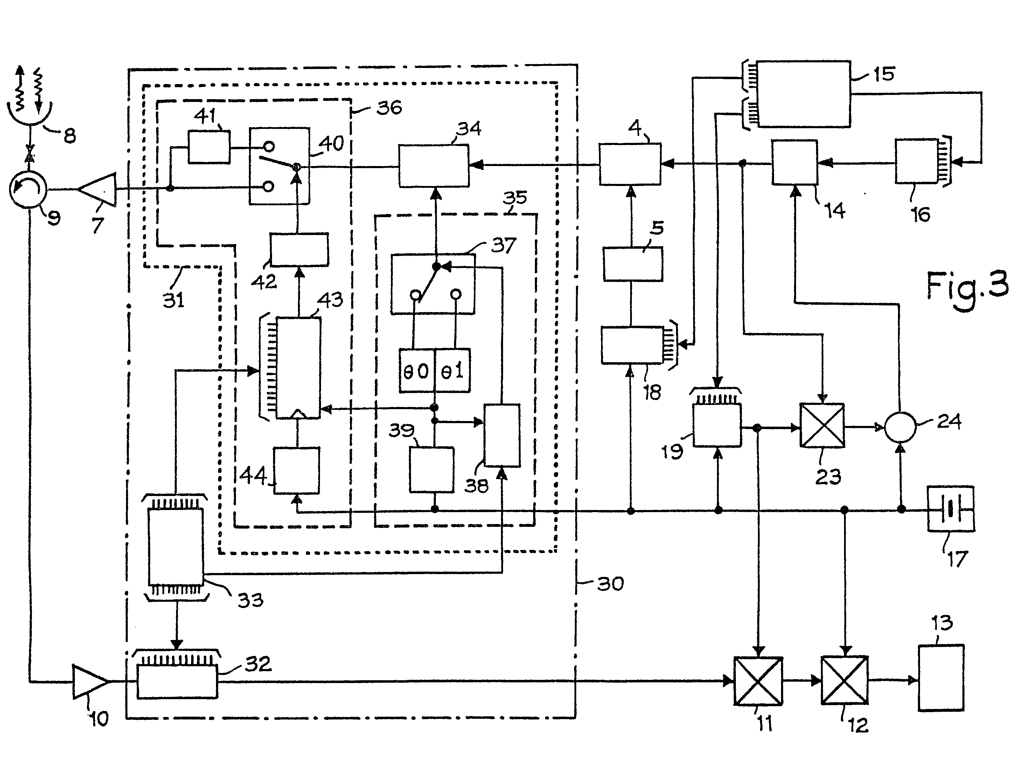

Cette protection est encore accrue par association des deux types d'agilité de fréquence, que l'on vient de décrire, avec un codage de phase. Un radar associant ces caractéristiques est représenté à la figure 3, les éléments identiques portant les références dans les figures 2 et 3.

L'ensemble 30, correspondant au codage de phase, comporte dans la chaîne d'émission des moyens de codage 31 entre le découpeur 4 et l'amplificateur de puissance 7, dans la chaîne de réception des moyens de décodage 32, constitués par exemple par une ligne acoustique programmable à n moments, entre l'amplificateur 10 et le mélangeur 11, et, des moyens de modification de code 33, constitués essentiellement par un microcalculateur, qui sont reliés aux moyens 31 de codage pour modifier le code et aux moyens 32 de décodage pour les adapter automatiquement au nouveau code.

Les moyens de codage 31 consistent en un amplificateur pulsé 34, un modulateur 35 et un codeur 36.

L'amplificateur pulsé 34 reçoit du découpeur 4 des impulsions de largeur $\mu$ à la fréquence de répétition Fr et fournit au codeur 36 des impulsions élargies de largeur $\theta$, la valeur de $\theta$ étant fournie par le modulateur 35 et le rapport $\theta/\mu$ étant égal à n.

Ce modulateur 35 est constitué par un commutateur électronique 37, qui est relié à l'amplificateur pulsé 34 et qui permet de choisir la valeur de $\theta$ parmi plusieurs valeurs prédéterminées ($\theta 0$ et $\theta 1$ sur la figure 4) suivant le mode d'utilisation recherche ou poursuite, avec ou sans codage de phase. Le commutateur 37 est commandé par un compteur 38, qui reçoit comme signal d'horloge le signal issu d'un diviseur de fréquence 39 qui est relié à l'oscillateur de référence 17 ; ce compteur est relié au micro-calculateur 33 qui permet d'élaborer différentes séquences de fonctionnement.

Le codeur 36 comprend un commutateur 40 qui est relié d'un côté à la sortie de l'amplificateur pulsé 34 et de l'autre côté à l'amplificateur d'émission 7 directement et via une ligne à retard 41. L'entrée de commande du commutateur 40 est reliée, via une interface 42, à la sortie d'un registre 43 à décalage parallèle-série dont les entrées sont reliées aux moyens 33 de modification de code.

Le codage en phase est réalisé par la modification de position du commutateur 40 qui se produit toutes les $\mu$ microsecondes, c'est-à-dire n fois en $\theta$ microsecondes ; en effet, suivant la position du commutateur 40 l'impulsion passe directement vers l'amplificateur 7 ou passe par la ligne à retard 41 pour être déphasée de 180° avant d'être émise.

Le fonctionnement des moyens de codage en phase n'est pas décrit de façon plus détaillée, car ils ne sont pas l'objet du brevet.

Le registre 43 a son entrée d'horloge reliée à la sortie d'un diviseur de fréquence 44 dont l'entrée est reliée à la sortie de l'oscillateur de référence 17, de telle sorte que chaque impulsion codée issue des moyens de codage 31 est en phase à l'origine avec le signal de référence de fréquence F2 et par conséquent avec le signal issu de l'oscillateur d'émission 14 qui est en phase avec l'oscillateur local lui-même en phase avec l'oscillateur de référence, selon la première caractéristique de l'invention.

Pour que cet assemblage puisse fonctionner, il faut que la largeur $\mu$ de l'impulsion émise soit un multiple de la période de l'oscillateur de référence 17, c'est-à-dire $\mu = k \cdot (1/F2)$, k étant ici le rapport du diviseur 44.

D'autre part, pour qu'agilité de fréquence de répétition et codage de phase soient compatibles, il faut qu'une variation de la fréquence de répétition conserve le synchronisme, le pas de variation ou saut de fréquence doit donc correspondre à une variation de période de largeur $\mu$ microsecondes.

La figure 4 représente des moyens 18 de modification de la fréquence de répétition qui permettent de conserver le synchronisme.

Ces moyens sont constitués essentiellement par une boucle à verrouillage de phase qui comporte premièrement un oscillateur 25 contrôlé en tension de fréquence nominale F, deuxièmement un diviseur de fréquence 26 de rapport variable V commandé par le microprocesseur 15 qui fixe la valeur de V entre $M - m$ et $M + m$, ce diviseur recevant le signal de fréquence F issu de l'oscillateur 25 et fournissant un signal de fréquence F/V, et, troisièmement un comparateur de phase 27 dont la première entrée est reliée à la sortie du diviseur 26 à rapport variable, dont la seconde entrée est reliée à la sortie d'un diviseur 28 de rapport R qui est relié à la sortie de l'oscillateur 17 de référence, et, dont la sortie est reliée à l'entrée de contrôle en tension de l'oscillateur 25.

La sortie de l'oscillateur 25 est reliée au circuit de synchronisation 5 via un diviseur 29 de rapport M qui fournit un signal de fréquence Fr de répétition.

Ces moyens 18 permettent de faire varier la fréquence Fr de plus ou moins i pas de F2/R · M autour de la valeur F2/R, avec $1 \leqslant i \leqslant m$, le pas F2/R · M correspondant à une variation de période de largeur $\mu$ microsecondes près de la fréquence F2/R.

Par exemple, dans le cas où l'on a une fréquence de référence F2 égale à 60 MHz, où la fréquence de répétition est égale à 3 KHz c'est-à-dire R égal à 20 000 et où la largeur $\mu$ d'une impulsion est égale à 0,333 $\mu$s, la période de répétition correspondant à une fréquence de répétition de 3 KHz est égale à 1/3 KHz soit 333,33 $\mu$s ce qui correspond à 1 000 impulsions de largeur $\mu$ ; le pas F2/R · M de variation de fréquence est donc de 3 Hz près de 3 000 Hz d'où M = 1 000 et F = 3 MHz. La fréquence Fr de répétition peut varier dans la mesure où l'on a :

$$Fr = 3\,000 \pm i \times 3 \text{ Hz avec } 0 \leqslant i \leqslant m.$$

Grâce à ces moyens, Fr peut être modifiée sans que le synchronisme du système ne soit modifié, tant que m garde une valeur inférieure à celle pour laquelle on atteint le maximum d'erreurs admissible pour la qualité du radar. Dans notre exemple numérique, la qualité est encore excellente avec m = 20.

## Revendications

1. Radar cohérent à impulsions à agilité de fréquence, du type comprenant pour l'émission un premier oscillateur (17) délivrant une première fréquence (F2), un deuxième oscillateur (19) délivrant une deuxième fréquence (F1) et commandé par des premiers moyens de modification de fréquence (15), un oscillateur d'émission (14) délivrant une fréquence d'émission (F0) et commandé par des deuxièmes moyens de modification de fréquence (16) et par des moyens de combinaison (23, 24) des première et deuxième fréquences, des moyens (5, 15, 18) pour élaborer un signal d'horloge déterminant une fréquence de répétition variable (Fr) correspondant à des impulsions de largeur $\mu$ variable qui est un multiple de la période du premier oscillateur, un découpeur (4) pour découper la fréquence d'émission (F0) selon ces impulsions sous la commande des moyens d'élaboration du signal d'horloge, un amplificateur de puissance (7) pour amplifier les impulsions du découpeur et les envoyer à une antenne d'émission-réception via un duplexeur (9), et pour la réception un amplificateur de réception (10) recevant les signaux de réception du duplexeur, un premier mélangeur (11) recevant le signal de sortie de l'amplificateur de réception et la deuxième fréquence (F1), un deuxième mélangeur (12) recevant le signal de sortie du premier mélangeur et la première fréquence (F2), et un dispositif d'exploitation (13) des informations contenues dans le signal de sortie du deuxième mélangeur, caractérisé en ce que le deuxième oscillateur (19) est un synthétiseur de fréquence piloté en phase par le premier oscillateur (17), que les moyens de combinaison des première et deuxième fréquences comprennent un troisième mélangeur (23) pour mélanger la deuxième fréquence (F1) et la fréquence d'émission (F0) et un comparateur de phase (24) pour comparer le signal de sortie du troisième mélangeur et la première fréquence (F2) et commander en tension l'oscillateur d'émission (14), ce qui pilote en phase cet oscillateur d'émission par le premier oscillateur (17).

2. Radar Doppler cohérent à impulsions à agilité de fréquence selon la revendication 1, caractérisé en ce que les premier et deuxième moyens de modification de fréquence sont constitués par un microprocesseur (15) relié premièrement à l'oscillateur d'émission via un convertisseur numérique-analogique (16), deuxièmement au deuxième oscillateur (19), et en ce que ce même microprocesseur (15) est relié aux entrées de commande d'un diviseur de fréquence (18) à rapport variable qui fait partie des moyens d'élaboration du signal d'horloge.

3. Radar Doppler cohérent à impulsions à agilité de fréquence selon la revendication 2, caractérisé en ce que des mémoires contenant des séquences de modification de fréquence sont associées au microprocesseur (15).

4. Radar Doppler cohérent à impulsions à agilité de fréquence selon la revendication 1, caractérisé en ce que les moyens de modification de fréquence sont constitués par des roues codeuses actionnées manuellement.

5. Radar Doppler cohérent à impulsions à agilité de fréquence selon la revendication 3 ou la revendication 4, comportant des moyens de codage de phase constitués premièrement par des moyens de codage (31) comprenant un amplificateur pulsé (34) qui est commandé par un modulateur (35) et dont l'entrée est reliée à la sortie du découpeur en impulsions (4), un codeur qui comprend un commutateur électronique (40) relié d'un côté à la sortie de l'amplificateur pulsé (34) et de l'autre à l'amplificateur d'émission (7) d'une part directement, d'autre part via une ligne à retard (41), et, un registre à décalage parallèle-série (43) dont la sortie est reliée à l'entrée de commande du commutateur électronique, deuxièmement par des moyens de décodage (32) entre l'amplificateur de réception et le premier mélangeur, et, troisièmement des moyens de modification de code (33) reliés aux moyens de codage et aux moyens de décodage, caractérisé en ce que l'entrée d'horloge du registre à décalage du codeur est reliée à la sortie d'un diviseur de fréquence (44) de rapport $k = \mu \cdot F2$ dont l'entrée est reliée à la sortie du premier oscillateur (17), en ce que les entrées de synchronisation du modulateur (35) et du registre à décalage (43) sont reliées à la sortie de cet oscillateur (17) via un autre diviseur de fréquence (39), et que les premier et deuxième moyens de modification de fréquence imposent un saut de fréquence correspondant à une variation de période de largeur $\mu$ microsecondes.

6. Radar Doppler cohérent à impulsions à agilité de fréquence selon la revendication 5, caractérisé en ce que les moyens d'élaboration du signal d'horloge comprennent un oscillateur (25) contrôlé en tension par le signal de sortie d'un comparateur de phase (27) dont l'une des entrées est reliée à la sortie du premier oscillateur (17) via un diviseur de fréquence (28) de rapport R et dont l'autre entrée est reliée à la sortie de l'oscillateur (25) de la boucle via un diviseur (26) de rapport variable V, $M - m < V < M + m$, commandé par des moyens de modification (15) tels que ceux définis dans la revendication 3 ou la revendication 4, la sortie de l'oscillateur étant reliée via un diviseur (29) de fréquence de rapport M à l'entrée du circuit de synchronisation (5) du découpeur (4), auquel il fournit un signal de fréquence Fr égal à $(F2/R) \pm (i \cdot (F2/R \cdot M))$, avec $0 \leq i \leq m$ et R étant choisi de telle sorte que le pas de variation $F2/R \cdot M$ corresponde à une variation de période de largeur $\mu$ près de la fréquence F2/R.

**Claims**

1. Coherent pulsed radar using frequency agility, of the type comprising, for transmission, a first oscillator (17) generating a first frequency (F2), a second oscillator (19) generating a second frequency (F1) and controlled by first frequency modification means (15), a transmitter oscillator (14) generating a transmitter frequency (F0) and controlled by second frequency modification means (16) and by combination means (23, 24) combining the first and second frequencies, means (5, 15, 18) for producing a clock signal defining a variable repetition frequency (Fr) corresponding to pulses of variable width $\mu$ which is a multiple of the period of the first oscillator, a chopper (4) for chopping the transmission frequency (F0) in accordance with these pulses under control of the means for producing the clock signal, a power amplifier (7) amplifying the pulses of the chopper and applying these to a transmission/reception antenna via a duplexer (9) and, for reception, a reception amplifier (10) receiving the reception signals from the duplexer, a first mixer (11) receiving the output signal of the reception amplifier and the second frequency (F1), a second mixer (12) receiving the output signal of the first mixer and the first frequency (F2), and a processing device (13) for processing the information obtained within the output signal of the second mixer, characterized in that the second oscillator (19) is a frequency synthesizer which is phase-controlled by the first oscillator (17), that the means for combining the first and second frequencies comprise a third mixer (22) for mixing the second frequency (F1) and the transmission frequency (F0), and a phase comparator (24) for comparing the output signal of the third mixer and the first frequency (F2) and for voltage controlling the transmission oscillator (14), whereby this transmission oscillator is phase-controlled by the first oscillator (17).

2. Coherent pulsed Doppler radar using frequency agility in accordance with claim 1, characterized in that the first and second frequency modification means are composed of a microprocessor (15) connected, in the first place, to the transmission oscillator through a digital-analog converter (16) and, in the second place, to the second oscillator (19), and in that the same microprocessor (15) is connected to the control inputs of a variable ratio frequency divider (18) forming part of the means for producing the clock signal.

3. Coherent pulsed Doppler radar using frequency agility according to claim 2, characterized in that memories containing frequency modification sequences are associated with the microprocessor (15).

4. Coherent pulsed Doppler radar using frequency agility according to claim 1, characterized in that the frequency modification means are composed of manually operated coding wheels.

5. Coherent pulsed Doppler radar using frequency agility according to claims 3 or 4, comprising phase coding means composed of, in the first place, coding means (31) comprising a pulsed amplifier (34) controlled by a modulator (35) and the input of which is connected to the output of the pulse chopper (4), a coder comprising an electronic switch (40) connected on one of its sides to the output of the pulse amplifier (34) and on the other side to the transmission amplifier (7), directly and through a delay line (41), respectively, and a parallel-serial shift register (43) the output of which is connected to the control input of the electronic switch, in the second place of decoding means (32) provided between the reception amplifier and the first mixer, and, in the third place, of code modification means (33) connected to the coding means and to the decoding means, characterized in that the clock input of the shift register of the coder is connected to the output of a frequency divider (44) having a ratio $k = \mu \cdot F2$ and the input of which is connected to the output of the first oscillator (17), in that the synchronization inputs of the modulator (35) and of the shift register (43) are connected to the output of this oscillator (17) through another frequency divider (39), and in that the first and second frequency modification means cause a frequency jump corresponding to a period variation of a width of $\mu$ microseconds.

6. Coherent pulsed Doppler radar using frequency agility according to claim 5, characterized in that the clock signal production means comprise an oscillator (25) which is voltage controlled by the output signal of a phase comparator (27) one of the inputs of which is connected to the output of the first oscillator (17) through a frequency divider (28) having the ratio R, and the other input of which is connected to the output of the oscillator (25) of the loop through a divider (26) having a variable ratio V, $M - m < V < M + m$ controlled by the modification means (15) such as defined in claims 3 or 4, the output of the oscillator being connected, through a frequency divider (29) having the ratio M, to the input of the synchronization circuit (5) of the chopper (4), to which it supplies a signal of the frequency Fr equal to $(F2/R) \pm (i \cdot (F2/R \cdot M))$ with $0 \leq i \leq m$, and R being selected in such a manner that the variation step $F2/R \cdot M$ corresponds to a period variation of the width $\mu$ close to the frequency F2/R.

**Ansprüche**

1. Frequenzagiles kohärentes Impulsradar vom Typ mit, auf der Sendeseite, einem ersten Oszillator (17), der eine erste Frequenz (F2) abgibt, einem zweiten Oszillator (19), der eine zweite Frequenz (F1) abgibt und durch erste Frequenzänderungsmittel (15) gesteuert ist, einem Sendeoszillator (14), der eine Sendefrequenz (F0) abgibt und durch zweite Mittel (16) zur Frequenzänderung und durch Kombiniermittel (23, 24) zum Kombinieren der ersten und der zweiten Frequenz gesteuert ist, Mitteln (5, 15, 18) zur Erzeugung eines Taktsignals, welches eine variable Wiederholungsfrequenz (Fr) bestimmt, die Impulsen der Breite $\mu$ entspricht, welche variabel ist und ein Vielfaches der Periode des ersten Oszillators beträgt, einem Zerhacker (4) zum Zerhacken der Senderfrequenz (F0) gemäß diesen Impulsen unter der Steuerung durch die Mittel zur Erzeugung des Taktsignals, einem Leistungsverstärker (7) zum Verstärken der Impulse des Zerhackers und zum Anlegen derselben an eine Sende/Empfangs-Antenne über einen Duplexer (9), und für die Empfangsseite mit einem Empfangsverstärker (10), welcher die Empfangssignale des Duplexers empfängt, einem ersten Mischer (11), der das Ausgangssignal des Empfangsverstärkers und die zweite Frequenz (F1) empfängt, einem zweiten Mischer (12) der das Ausgangssignal des ersten Mischers sowie die erste Frequenz (F2) empfängt, und einer Verarbeitungsvorrichtung (13) zur Verarbeitung der Informationen, die in dem Ausgangssignal des zweiten Mischers enthalten sind, dadurch gekennzeichnet, daß der zweite Oszillator (19) eine Frequenzsyntheseschaltung ist, deren Phase durch den ersten Oszillator (17) gesteuert ist, daß die Kombiniermittel zum Kombinieren der ersten und zweiten Frequenz einen dritten Mischer (23) zum Mischen der zweiten Frequenz (F1) mit der Senderfrequenz (F0) sowie einen Phasenkomparator (24) umfassen, um das Ausgangssignal des dritten Mischers mit der ersten Frequenz (F2) zu vergleichen und den Sendeoszillator (14) spannungsmäßig zu steuern, wodurch dieser Sendeoszillator durch den ersten Oszillator (17) phasengesteuert wird.

2. Frequenzagiles kohärentes Impuls-Dopplerradar nach Anspruch 1, dadurch gekennzeichnet, daß die ersten und zweiten Frequenzänderungsmittel durch einen Mikroprozessor (15) gebildet sind, welcher einerseits mit dem Sendeoszillator über einen Digital-Analog-Umsetzer (16) verbunden ist und zum zweiten mit dem zweiten Oszillator (19) verbunden ist, und daß dieser selbe Mikroprozessor (15) und die Steuereingänge eines Frequenzteilers (18) mit variablem Teilerverhältnis, der Bestandteil der Mittel zum Erzeugen des Taktsignals ist, angeschlossen ist.

3. Frequenzagiles kohärentes Impuls-Dopplerradar nach Anspruch 2, dadurch gekennzeichnet, daß dem Mikroprozessor (15) Speicher zugeordnet sind, welche Frequenzänderungssequenzen enthalten.

4. Frequenzagiles kohärentes Impuls-Dopplerradar nach Anspruch 1, dadurch gekennzeichnet, daß die Frequenzänderungsmittel durch manuell betätigte Codierräder gebildet sind.

5. Frequenzagiles kohärentes Impuls-Dopplerradar nach Anspruch 3 oder 4, mit Phasencodiermitteln, die gebildet sind erstens aus Codiermitteln (31), welche einen gepulsten Verstärker (34), der durch einen Modulator (35) gesteuert ist und dessen Eingang mit dem Ausgang des Impulszerhackers (4) verbunden ist, einen Codierer, welcher einen elektronischen Schalter (40) umfaßt, der einerseits mit dem Ausgang des gepulsten Verstärkers (34) und andererseits mit dem Sendeverstärker (7) einerseits direkt und andererseits über eine Verzögerungsleitung (41) verbunden ist, und ein Parallel-Seriell-Schieberegister (43) enthalten, dessen Ausgang mit dem Steuereingang des elektronischen Schalters verbunden ist, zweitens aus Decodiermitteln (32) zwischen dem Empfangsverstärker und dem ersten Mischer und drittens aus Codeveränderungsmitteln (33), die mit den Codiermitteln und den Decodiermitteln verbunden sind, daduch gekennzeichnet, daß der Takteingang des Schieberegisters des Codierers mit dem Ausgang eines Frequenzteilers (44) verbunden ist, dessen Teilerverhältnis $k = \mu \cdot F2$ beträgt und dessen Eingang mit dem Ausgang des ersten Oszillators (17) verbunden ist, daß die Synchronisationseingänge des Modulators (35) und des Schieberegisters (43) mit dem Ausgang dieses Oszillators (17) über einen weiteren Frequenzteiler (39) verbunden sind und daß die ersten und die zweiten Frequenzänderungsmittel einen Frequenzsprung auferlegen, der einer Periodenänderung einer Breite von $\mu$ Mikrosekunden entspricht.

6. Frequenzagiles kohärentes Impuls-Dopplerradar nach Anspruch 5, dadurch gekennzeichnet, daß die Mittel zur Erzeugung des Taktsignals einen spannungsgesteuerten Oszillator (25) umfassen, der durch das Ausgangssignal eines Phasenkomparators (27) gesteuert wird, dessen einer Eingang mit dem Ausgang des ersten Oszillators (17) über einen Frequenzteiler (28) mit dem Teilerverhältnis R und dessen anderer Eingang mit dem Ausgang des Oszillators (25) der Schleife über einen Teiler (26) mit variablem Teilerverhältnis V verbunden ist, wobei $M - m < V < M + m$, welcher durch Änderungsmittel (15) wie die in Anspruch 3 oder 4 definierten gesteuert wird, wobei der Ausgang des Oszillators über einen Frequenzteiler (29) mit dem Teilerverhältnis M mit dem Eingang der Synchronisationsschaltung (5) des Zerhackers (4) verbunden ist, and die er ein Signal der Frequenz Fr abgibt, das gleich $(F2/R) \pm (i \cdot (F2/R \cdot M))$ ist, mit $0 \leqslant i \leqslant m$, wobei R so gewählt ist, daß der Änderungsschritt $F2/R \cdot M$ einer Periodenänderung der Breite $\mu$ nahe der Frequenz $F2/R$ entspricht.

Fig.1

Fig.2

Fig.3

Fig.4